# FASCICULE DE BREVET EUROPEEN

(11) **EP 1 849 984 B1**
(45) Date de publication et mention de la délivrance du brevet: **24.06.2009**
(21) Numéro de dépôt: 07290516.9
(22) Date de dépôt: 25.04.2007
(51) Int. Cl.: F02K 1/40, F02K 1/28, B64D 33/04

(54) **Ensemble d'échappement des gaz de propulsion dans un aéronef avec deux canaux coudés**
Anordnung mit zwei Ellenbogen-förmigen Kanälen zum Ausstoßen von Treibgasen in einem Luftfahrzeug
Propelling gas exhaust assembly in an aircraft with two elbow-shaped channels

(30) Priorité: 28.04.2006 FR 0651542
(43) Date de publication de la demande: 31.10.2007
(73) Titulaire: SNECMA, 75015 Paris (FR)
(72) Inventeur: Daris, Thomas, 75012 Paris (FR); Schenher, Frédéric Henri Paul, 77720 La Chapelle Gauthier (FR); Prouteau, Jackie Raymond Julien, 94440 Villecresnes (FR); Brunet, Edgar, 92200 Neuilly sur Seine (FR)
(74) Mandataire: David, Daniel

(56) Documents cités:
- GB-A- 1 554 962
- US-A- 3 981 448
- US-A- 5 170 964
- US-A- 6 112 513
- US-A1- 2002 189 232

## Description

L'invention se rapporte au domaine de la propulsion des aéronefs par éjection de flux gazeux, et concerne l'ensemble d'échappement en aval du générateur de gaz jusqu'à la tuyère.

Pour des avions propulsés par des turboréacteurs, avec pilote ou sans pilote, les drones, à applications militaires, un objectif est la furtivité.

La furtivité est définie notamment par rapport à deux paramètres : la surface équivalent radar (SER) et la signature infrarouge (SIR). La SER est la surface susceptible d'apparaître sur un radar, compte tenu de la géométrie de l'aéronef. La SIR est la signature en chaleur que laisse l'aéronef, notamment au niveau de ses tuyères d'éjection.

Pour réduire cette signature en chaleur, voire la supprimer, il est connu de masquer le rayonnement infrarouge émis par les gaz chauds issus du générateur de gaz. On connaît par exemple le brevet US 3693880 qui décrit un dispositif de ce type. Il comprend un écran en forme de corps de révolution placé dans le canal d'échappement des gaz tout en étant espacé des parois de ce dernier et maintenu par des bras radiaux. Il a une forme aérodynamique guidant au mieux les gaz le long de son profil ovoïdal et sa surface est refroidie par de l'air plus froid acheminé par les bras radiaux. Le conduit cylindrique devient annulaire entre l'écran et la paroi du conduit. L'écoulement redevient cylindrique en aval de l'écran pour être évacué par une tuyère. Le diamètre du conduit s'élargit à cet endroit et suit un profil parallèle à celui de l'écran pour conserver une ouverture suffisante. Le diamètre maximal de l'écran est suffisant pour masquer la turbine en vue depuis l'arrière. En outre la partie aval de l'écran est à double paroi parcourue par l'air de refroidissement pour en éviter tout échauffement.

Le présent déposant a développé par ailleurs une tuyère double, dite bifide, dans laquelle le flux de gaz issu du moyen de génération de gaz est divisé en deux flux et guidé jusque vers deux tuyères. Les deux flux d'égale importance sont éjectés en parallèle dans l'axe de la poussée. L'avantage de cette disposition est de permettre le guidage de l'aéronef, notamment en lacet par un contrôle des deux flux soit par orientation de leur vecteur poussée soit par les débits. En étant écartés l'un de l'autre, ils se retrouvent aussi décalés par rapport à l'axe du générateur. De cette façon, dans le cas où le moyen le générateur comprend une turbine, celle-ci est susceptible de ne pas être visible de l'arrière à travers l'ouverture des tuyères. La signature infrarouge est donc faible.

De même, le document US 3981448 décrit toutes les caractéristiques du préambule de la revendication 1.

La présente invention vise un dispositif d'échappement dont la signature infrarouge est encore réduite par rapport à la solution précédente.

L'invention parvient à réaliser cet objectif avec un ensemble d'échappement des gaz de propulsion, dans un aéronef propulsé par des gaz chauds produits dans l'axe de celui-ci par un générateur de gaz, comprenant un élément de transition débouchant dans deux éléments de conduits communiquant chacun avec une demi tuyère d'éjection, caractérisé par le fait que chacun des deux éléments de conduit forme un coude en aval de l'élément de transition de telle manière que les éléments à l'intérieur du conduit qui sont situés en amont du coude ne sont pas visibles depuis l'arrière.

Dans la présente demande le terme coude est compris de la façon suivante. Chaque élément de conduit, de forme tubulaire, comprend une première partie guidant le flux gazeux dans une direction radiale s'éloignant de l'axe et une deuxième partie en aval de la première guidant le flux gazeux dans une direction radiale vers l'axe. En aval du coude le flux est ramené dans l'axe.

Avantageusement, les deux coudes sont symétriques l'un par rapport à l'autre et plus particulièrement sont dans le même plan. L'invention s'applique notamment à un aéronef propulsé par au moins un générateur de gaz constitué par un turboréacteur. Celui-ci peut être de type monoflux ou à flux multiples.

On a constaté avec surprise qu'en coudant les deux flux gazeux de cette façon on pouvait masquer efficacement non seulement le disque de turbine mais aussi les parties les plus chaudes en aval de celle-ci. Par ailleurs ce concept permet aussi de réaliser un élément de transition minimisant les pertes de charge aérodynamiques tout en favorisant le mélange des gaz avant éjection.

Ainsi l'ensemble d'échappement comprend un élément de transition avec une partie cylindrique amont de section notamment circulaire communiquant vers l'aval avec les deux conduits. De préférence la section de l'élément de transition évolue vers l'aval jusqu'à former deux sections elliptiques adjacentes. Ces deux ellipses pouvant avantageusement être à axe principal vertical ou horizontal.

L'invention porte également sur la capacité de guidage fournie par ce type d'échappement. On a appliqué la solution décrite dans la demande de brevet déposée par le présent demandeur sous le numéro FR 0551857.En effet dans le cas d'une tuyère telle que destinée à équiper un drone militaire, on associe un objectif de discrétion SIR et SER au besoin de poussée vectorielle. On est conduit à concevoir des tuyères bidimensionnelles aplaties, pouvant avoir un allongement de l'ordre de 5 pour les discrétions SIR et SER et avec une forme extérieure pointue pour la discrétion en SER.

La présente invention a également pour objectif la réalisation d'un dispositif de pilotage d'un aéronef, notamment en lacet, qui soit efficace et qui soit associé à une maîtrise du débit moteur.

Ce dispositif doit être applicable aux aéronefs mono moteur ou bi moteurs et en particulier aux drones.

Ce dispositif doit être capable d'assurer en continu une vectorisation de faible amplitude sans entraîner une pénalisation des performances du générateur de gaz.

Il doit être capable de fournir une poussée vectorielle importante pour les besoins de pilotage de l'aéronef.

On parvient à réaliser ces objectifs avec l'ensemble d'échappement de l'invention conformé de manière à diviser un flux principal de gaz de propulsion en un premier et un second flux pour une éjection dans une première et une seconde demi tuyères et comportant au moins l'un des deux moyens de pilotage suivants : moyen de répartition du flux principal dans chacune des deux demi tuyères et moyen d'orientation du vecteur de poussée produite par chacune des deux demi tuyères.

Par demi tuyère, on comprend -dans la présente demande une tuyère d'éjection des gaz qui reçoit une partie du flux principal en aval de la turbine. Ce terme n'est pas associé à une forme particulière. On profite de la solution à deux flux pour contrôler séparément les deux demi vecteurs de poussée en module et en orientation.

Avantageusement, au moins l'un des dits deux moyens, de préférence les deux, sont à injection fluidique et de préférence encore l'ensemble d'échappement comporte les dits deux moyens. Cette solution présente l'avantage d'être simple et de fonctionner avec un nombre réduit de dispositifs d'injection fluidique, assurant une fiabilité élevée et un coût faible. Cependant les moyens de contrôle des deux flux peuvent être mécaniques.

En premier lieu, les dites demi tuyères sont disposées pour une orientation du vecteur poussée en lacet. On palie ainsi l'absence de dérive.

Selon une variante, les dites demi tuyères sont disposées pour un pilotage en tangage ou en roulis ou encore la tuyère comprend deux paires de demi tuyères par exemple l'une pour l'orientation en lacet l'autre pour l'orientation en tangage. D'autres dispositions ou combinaisons sont possibles.

Conformément à une autre caractéristique, le moyen de pilotage de la répartition des flux comprend des moyens d'injection de fluide au col de chacune des demi tuyères. Plus précisément, le générateur de gaz étant un turboréacteur, les moyens d'injection fluidiques sont alimentés par de l'air pouvant être prélevé au compresseur du générateur. Cette solution est particulièrement avantageuse car elle permet un fonctionnement équilibré dans toutes les phases de vol. Notamment on prévoit un procédé de fonctionnement de la tuyère selon lequel on prélève en continu de l'air au compresseur du générateur.

Conformément à une variante de réalisation, le flux principal est généré par deux générateurs de gaz. Dans ce cas l'ensemble d'échappement comprend de préférence seulement un moyen d'orientation du vecteur de poussée produit par chacune des deux demi tuyères.

On décrit maintenant l'invention plus en détail en référence aux dessins annexés sur lesquels
La figure 1 montre en vue de dessus un exemple d'aéronef auquel s'applique l'invention ;
La figure 2 montre en vue de dessus une tuyère de type bifide telle que décrite dans la demande de brevet FR 05 51 857 ;
La figure 3 montre en vue de dessus un ensemble d'échappement conforme à l'invention ;
Les figures 4 à 6 montrent l'ensemble de la figure 3 en vue respectivement de profil, arrière et en perspective de trois quarts arrière ;
La figure 7 montre la forme de la section de l'ensemble d'échappement selon les coupes VIIa-VIIa, VIIb-VIIb, VIIc-VIIc et VIId-VIId respectivement ;
La figure 8 est une représentation schématique de la disposition des moyens de pilotage de l'invention dans une demi tuyère ;
La figure 9 illustre le fonctionnement des moyens de pilotage disposés au col ;
La figure 10 illustre le fonctionnement des moyens de pilotage disposés dans le divergent des demi tuyères.

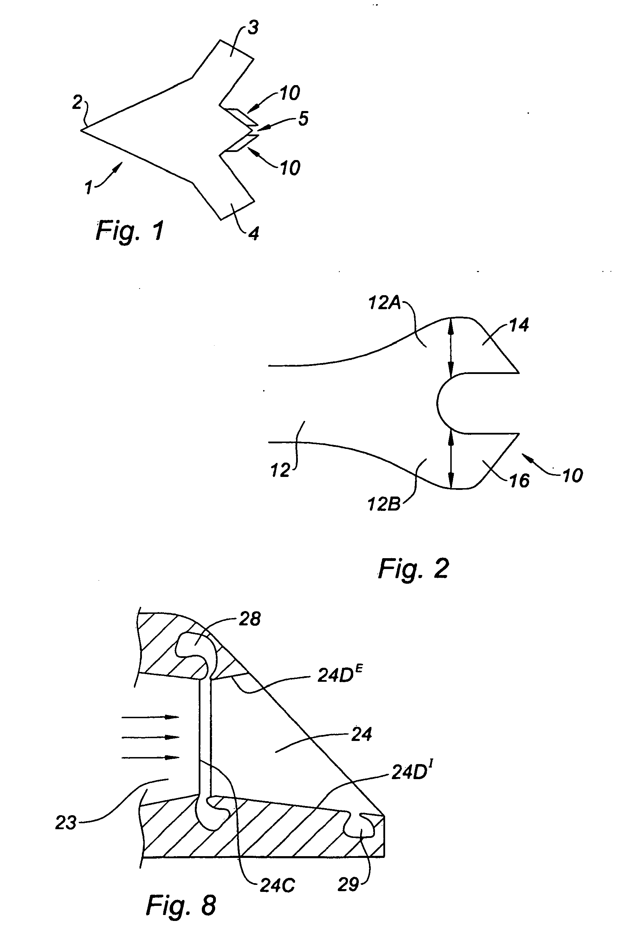

L'aéronef 1 représenté sur la figure 1 est un exemple non limitatif. Il a un nez 2, deux ailes 3 et 4 et est propulsé par un ou deux turboréacteurs non visibles. Il est conformé de manière à présenter des SER et SIR aussi faibles que possible. Sa partie arrière en particulier ne comprend pas de dérive verticale et se termine par une pointe 5 avec un angle au sommet adapté, par exemple de 40°, pour rejeter les ondes radars vers l'infini. L'ensemble d'échappement 10 tire partie de cette contrainte en étant bifide. Elle répartit le flux principal issu du canal 12 en entrée en deux flux dans deux canaux symétriques 12A et 12B qui se terminent par deux demi tuyères 14 et 16 à section rectangulaire. Les canaux 12, 12A et 12B ont une forme adaptée pour assurer la séparation de l'écoulement en deux flux mais aussi la transition d'une forme cylindrique à section circulaire ou sensiblement circulaire à une forme à section rectangulaire. Le cas échéant, les canaux comprennent un coude supplémentaire pour assurer le masquage de la turbine. Comme on la voit sur les figures ce masquage est déjà assuré au moins en partie par l'écartement entre les demi tuyères 14 et 16.

Selon la présente demande, on perfectionne la forme de l'ensemble d'échappement de manière à assurer le masquage du bloc de turbine quelle que soit la position d'un observateur arrière. Comme on le voit sur la figure 2, une partie de la tuyère bifide, en raison de son plan d'éjection en biseau, est visible dès les visées latérales. Il s'agit donc d'en réduire aussi la signature.

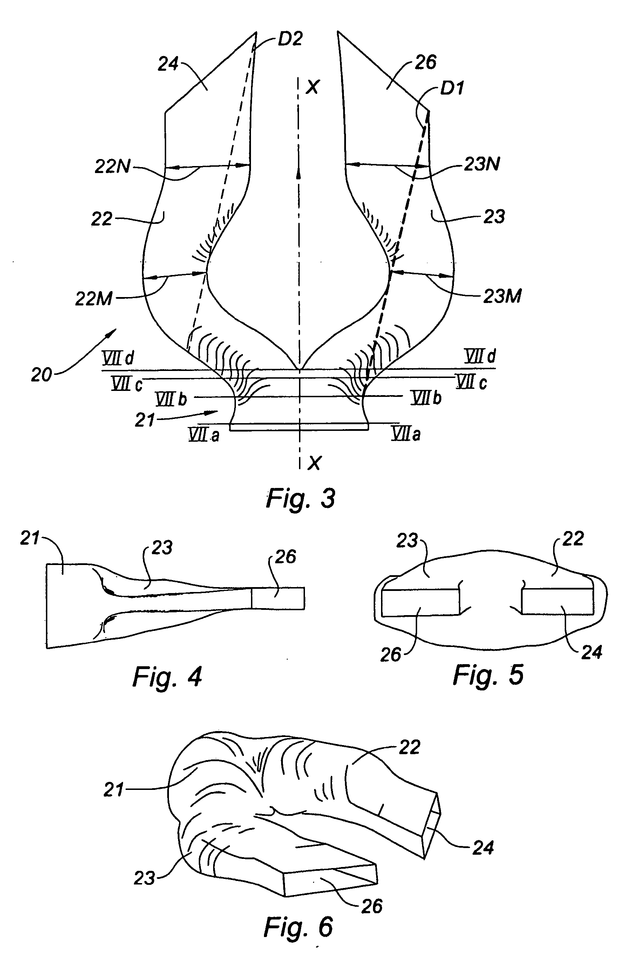

En se reportant aux figures 3 à 7, on voit la géométrie de l'ensemble d'échappement 20 conforme à l'invention.

Cet ensemble comprend un élément de transition 21 avec une partie amont cylindrique 21A, de section circulaire ou autre. L'élément de transition débouche dans un premier élément de conduit 22 et un second élément de conduit 23, tous les deux en parallèle. Les deux éléments de conduits sont terminés chacun par une demi- tuyère, 24 et 26 respectivement.

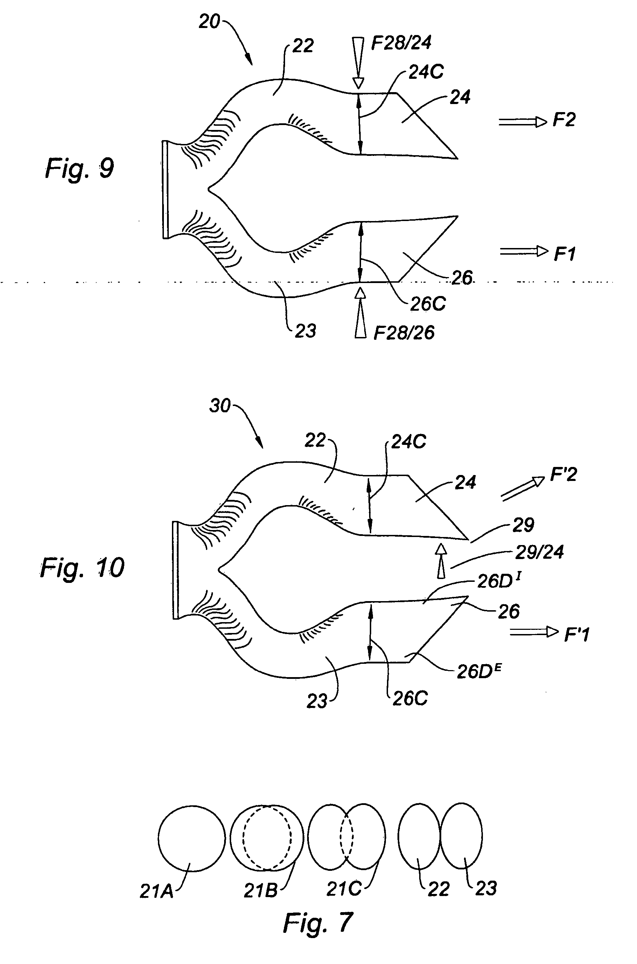

La partie amont 21A est en communication directe avec la sortie du générateur de gaz, non représenté, tel qu'une turbine d'un moteur à turbine à gaz. Comme on le voit sur la figure 7 sa section est de préférence circulaire. Elle peut cependant en dévier. La forme évolue depuis l'entrée 21A. On a représenté sur la figure 7 deux formes 21B et 21C correspondant à des plans de coupe intermédiaires entre l'entrée et la séparation en deux éléments de conduit 22 et 23.

La forme de l'élément de transition évolue vers l'aval progressivement de manière à prendre le contour en 21B de deux ellipses qui se recouvrent partiellement comme on le voit dans le plan de coupe VIIb-VIIb. Les deux ellipses, identiques, sont ici à axe principal vertical. En allant vers l'aval, elles s'écartent progressivement l'une de l'autre jusqu'à prendre le contour en 21C de deux ellipses comme on le voit dans le plan de coupe VIIc-VIIc. La séparation se produit dans le plan de coupe VIId-VIId.

En se déplaçant axialement vers l'aval, les deux conduits forment chacun un coude. Ils s'écartent progressivement l'un de l'autre, et dévient les flux gazeux radialement vers l'extérieur jusqu'à un écartement maximal en 22M et 23M où les flux deviennent axiaux. En aval, ils se rapprochent l'un de l'autre en déviant les flux radialement vers l'axe jusqu'en 22N et 23N où ils sont ramenés dans l'axe. A ce niveau l'écartement entre les deux conduits est encore suffisant pour correspondre sensiblement à celui du diamètre du plan d'entrée 21A. Chaque conduit se termine par une demi-tuyère, 24 et 26 respectivement, divergente en aval du col qui se situe au niveau du plan 22N-23N. Elles sont ici à section rectangulaire mais d'autres formes sont possibles. La forme des sections des conduits 22 et 23 évolue progressivement jusqu'à avoir la forme des demi tuyères. Les aires sont déterminées en fonction des contraintes de la mécanique des fluides.

De préférence l'ensemble présente au moins l'une des relations dimensionnelles suivantes :
Lcoude/Lcanal est compris entre 0,5 et 0,7
Lint/Lext >= 1/2 ;
Lint/Lcanal proche de 1/3 ;
Lext/Lcanal >= 1/2 ;
Lséparation/Lcanal <= 0,3 ;
Où
Lcoude est la longueur mesurée axialement depuis le plan d'entrée 21A jusqu'au niveau où le coude est à son écartement latéral par rapport à l'axe maximal ;
Lcanal est la longueur mesurée axialement depuis le plan d'entrée 21A jusqu'au col des demi tuyères ;
Lint est la largeur du coude mesurée transversalement depuis l'axe moteur jusqu'à la paroi interne du conduit, au niveau où l'élément de conduit est écarté à son maximum ;
Lext est la largeur du coude mesurée depuis l'axe jusqu'à la paroi externe du conduit, au niveau où l'élément de conduit est écarté à son maximum ;
Lséparation est la longueur mesurée le long de l'axe moteur depuis le plan d'entrée 21A jusqu'au plan de coupe VIId-VIId.

Comme cela est illustré par les droites D1 et D2, une telle géométrie permet un masquage efficace des zones chaudes du moteur et en particulier des zones de l'élément de transition parcourues par le flux gazeux. Ces droites constituent les limites de visibilité de ces zones.

On décrit maintenant le moyen de guidage en lacet de l'aéronef en référence aux figures 8 à 10. Dans cet exemple chacune des demi tuyères est constituée d'un col rectangulaire, 24C et 26C respectivement, d'allongement horizontal, rapport largeur/hauteur, élevé, comme on le voit sur la figure 8. L'allongement des tuyères peut être de 2,5. En aval du col, le divergent est formé des deux parois verticales. Il est court du côté externe 24D^{E} et 26D^{E}. Les parois verticales du côté interne 24D^{I} et 26D^{I} sont plus longues. Cela donne une forme en biseau du bord aval des tuyères, 24 et 26. Les parois supérieures et inférieures sont soit parallèles entre elles soit divergentes.

L'ensemble est de préférence optimisé pour assurer, dans les cas sans injection et sans vectorisation, une poussée transversale de chaque demi tuyère minimale. En effet celle-ci se traduit par une perte de poussée axiale qu'il faut réduire à un minimum. La poussée latérale globale reste nulle en raison de la symétrie du système.

Conformément à une caractéristique de l'invention pour assurer le guidage de l'aéronef 1 sans empennage, on prévoit des moyens de pilotage par lesquels on agit sur les deux flux. Ces moyens de pilotage peuvent être mécaniques ou fluidiques.

La tuyère convergente divergente, 24 par exemple, comprend le col 24C et, en aval, les deux parois divergentes 24D^{I} et 24D^{E}. La tuyère comprend ici un injecteur de fluide 28 disposé sur une paroi au niveau du col et un injecteur de fluide 29 situé sur la paroi 24D^{I} du divergent. L'injecteur est de préférence situé près de l'extrémité du divergent.

De façon symétrique la demi tuyère 26 est équipée d'un injecteur de fluide 28 au col 26C et d'un injecteur de fluide 29 sur la paroi de divergent 26D^{I}

Les injecteurs 28 et 29 sont alimentés avantageusement par de l'air prélevé au compresseur du turboréacteur qui fournit le flux principal, le cas échéant.

Le fonctionnement est le suivant. On a représenté sur la figure 9 par des flèches 28/24 et 28/26 les injections d'air par les injecteurs 28. Le moment de lacet est créé par le pilotage de la répartition du débit dans chacune des deux demi tuyères 24 et 26 au moyen des injections de fluide aux deux cols. La valeur du débit est illustrée par la longueur de la flèche, et ici une flèche est plus longue que l'autre. Selon cet exemple la demi tuyère 24 reçoit un fort débit injecté 28/24, et par conséquent subit une importante restriction de la section efficace au col. Inversement la demi tuyère 26 reçoit peu ou pas de débit au col. Il en résulte la création d'un différentiel de poussée axiale. La poussée F1 sur la demi tuyère 26 est plus grande que la poussée F2 sur la demi tuyère 24. Il en résulte un moment de lacet.

On observe cependant qu'une obstruction subite de la tuyère créerait instantanément une augmentation de pression dans le canal et un risque de pompage du compresseur. Conformément à un mode préféré de fonctionnement, on crée une injection permanente nominale. Elle est réalisée à iso débit prélevé de telle sorte que le générateur ne subit pas de variation soudaine au cours de la mission tout en régulant la tuyère à iso section efficace au col totale. Le cycle thermodynamique du moteur est directement optimisé sous cette contrainte de prélèvement constant. De cette façon, le système de régulation de l'air prélevé fonctionne de façon continue et ne connaît pas de phase transitoire de démarrage.

Ainsi ce mode de fonctionnement conforme à l'invention fournit avec un impact faible sur les performances du moteur, un poussée vectorielle qui permet de compenser l'absence d'empennage cellule, notamment pour les régimes de croisières ou transitoires lents.

On décrit maintenant le fonctionnement du dispositif d'injection situé dans le divergent des tuyères 24 et 26 en relation avec la figure 10.

Les injecteurs 29 sont dans ce mode de réalisation disposés de préférence en extrémité de la paroi longue de divergent. En injectant un fluide dans la tuyère 24, dont la direction est représentée par la flèche 29/24, on induit une déviation du vecteur de poussée produite par la tuyère et représenté par la flèche F'2. La poussée F'1 fournie par la demi tuyère 26 reste axiale puisque rien ne vient perturber sa direction. Il s'ensuit la création d'un moment de lacet par rapport au centre de gravité de l'avion. Ce mode de fonctionnement fournit une poussée vectorielle importante pour assurer le pilotage de l'aéronef, au détriment cependant des performances du générateur. Cette détérioration est toutefois maîtrisée.

On a décrit un mode de réalisation de l'invention. Cependant de nombreuses variantes sont possibles sans sortir du cadre de l'invention. Par exemple on a montré un canal alimenté par un seul générateur de gaz. Dans le cas d'un aéronef bimoteur les deux demi flux d'échappement sont générés par deux moteurs distincts dont la régulation est synchronisée. De préférence on utilise les seuls injecteurs dans le divergent.

Des variantes sur la disposition et le fonctionnement des moyens de pilotage, comprennent la présence d'un seul moyen de pilotage. Il est possible de le faire fonctionner en même temps que l'autre moyen ou séparément.

Selon un mode de réalisation non représenté, les tuyères peuvent être de type fluidique avec éjecteur, c'est-à-dire un flux secondaire débouchant dans ou en aval du canal principal.

Les moyens de pilotage selon l'invention peuvent être combinés en partie avec des moyens mécaniques d'orientation des flux.

## Revendications

1. Ensemble d'échappement des gaz de propulsion, dans un aéronef propulsé par des gaz chauds produits dans l'axe de celui-ci par un générateur de gaz, comprenant un élément de transition (21) débouchant dans deux éléments de conduit (22, 23) communiquant chacun avec une demi tuyère d'éjection (24, 26) **caractérisé par le fait que** chacun des deux éléments de conduit (22, 23) forme un coude en aval de l'élément de transition défini par une première partie guidant le flux gazeux dans une direction radiale s'éloignant de l'axe de l'aéronef et une deuxième partie en aval de la première partie guidant le flux gazeux dans une direction radiale vers le dit axe, en aval du coude le flux gazeux étant ramené dans l'axe, les éléments à l'intérieur du conduit qui sont situés en amont du coude n'étant pas visibles depuis l'arrière.

2. Ensemble selon la revendication précédente dont les deux coudes sont dans un même plan et sont symétriques l'un par rapport à l'autre.

3. Ensemble selon lune des revendications précédentes dont le générateur de gaz est un moteur à turbine à gaz.

4. Ensemble selon la revendication précédente dont l'élément de transition comprend une partie amont cylindrique (21 A), notamment de section circulaire.

5. Ensemble selon la revendication précédente dont la section de l'élément de transition évolue vers l'aval depuis la forme de la section cylindrique progressivement à deux sections elliptiques adjacentes.

6. Ensemble selon la revendication précédente dont la section elliptique des deux éléments de conduit (22, 23) est à axe principal vertical ou horizontal.

7. Ensemble selon l'une des revendications précédentes conformé de manière à diviser un flux principal de gaz de propulsion en un premier et un second flux pour une éjection dans une première et une seconde demi tuyères (24, 26) et comportant au moins l'un des deux moyens de pilotage suivants : moyen de répartition du flux principal dans chacune des deux demi tuyères et moyen d'orientation du vecteur de poussée produite par chacune des deux demi tuyères.

8. Ensemble selon la revendication précédente dont les dits deux moyens sont à injection fluidique (28, 29) ou mécaniques.

9. Ensemble selon l'une des revendications 7 et 8 dont les dites demi tuyères (24, 26) sont disposées pour une orientation du vecteur poussée en lacet.

10. Ensemble selon l'une des revendications 7 à 9 dont les dites demi tuyères (24, 26) sont disposées pour un pilotage en tangage ou en roulis.

11. Ensemble selon les revendications 9 et 10 comprenant deux paires de demi tuyères, notamment l'un pour l'orientation en lacet l'autre pour l'orientation en tangage.

12. Ensemble selon la revendication 8 dont le moyen de pilotage de la répartition des flux comprend des moyens d'injection (28) de fluide au col (24C, 26C) de chacune des demi tuyères.

13. Ensemble selon la revendication précédente, le générateur de gaz étant un turbomoteur, dont les moyens d'injection fluidiques sont alimentés par de l'air prélevé au compresseur du générateur.

14. Procédé de fonctionnement de l'ensemble d'échappement selon la revendication précédente comprenant un prélèvement continu au compresseur du générateur.

15. Ensemble selon la revendications 7 ou 8 dont le flux principal est généré par deux générateurs de gaz, et comprenant un moyen d'orientation du vecteur de poussée produit par chacune des deux demi tuyères.

16. Turbomachine comportant un ensemble d'échappement selon l'une des revendications 1 à 13 et 15.

## Claims

1. A propulsion gas exhaust assembly, in an aircraft propelled by hot gases produced along the axis of the latter by a gas generator, comprising a transition element (21) emerging in two duct elements (22, 23) each communicating with an ejection half-nozzle (24, 26), wherein each of the two duct elements (22, 23) forms an elbow downstream of the transition element defined by a first portion guiding the gas flow in a radial direction away from the axis of the aircraft and a second portion downstream of the first portion, guiding the gas flow in a radial direction toward said axis, downstream of the elbow the gas flow being returned to the axis, the elements inside the duct that lie upstream of the elbow not being visible from the rear.

2. The assembly as claimed in the preceding claim, the two elbows of which lie in the same plane and are symmetrical with respect to each other.

3. The assembly as claimed in either of the preceding claims, the gas generator of which is a gas turbine engine.

4. The assembly as claimed in the preceding claim, the transition element of which comprises a cylindrical upstream portion (21A), especially of circular cross section.

5. The assembly as claimed in the preceding claim, the cross section of the transition element of which changes toward the downstream, from the cylindrical cross section shape progressively to a shape with two adjacent elliptical cross sections.

6. The assembly as claimed in the preceding claim, the elliptical cross section of the two duct elements (22, 23) of which has a vertical or horizontal major axis.

7. The assembly as claimed in one of the preceding claims, shaped so as to divide a main propulsion gas flow into a first and a second flow for an ejection into a first and a second half-nozzle and comprising at least one of the following two controlling means: a means of distributing the main flow into each of the two half-nozzles and a means of orienting the thrust vector produced by each of the two half-nozzles.

8. The assembly as claimed in the preceding claim, said two means of which are fluid injection or mechanical.

9. The assembly as claimed in one of claims 7 and 8, said half-nozzles of which are placed for a yaw orientation of the thrust vector.

10. The assembly as claimed in one of claims 7 to 9, said half-nozzles of which are placed for a pitch or roll control.

11. The assembly as claimed in one of claims 9 and 10, comprising two pairs of half-nozzles, particularly one for the yaw orientation, the other for the pitch orientation.

12. The assembly as claimed in claim 8, the means for controlling the distribution of the flows of which comprises means for fluid injection at the throat of each of the half-nozzles.

13. The assembly as claimed in the preceding claim, the gas generator being a turboengine, the fluid injection means of which are supplied by the air tapped from the compressor of the generator.

14. A method of operating the exhaust assembly as claimed in the preceding claim comprising a continuous tapping from the compressor of the generator.

15. The assembly as claimed in claim 7 or 8, the main flow of which is generated by two gas generators, and comprising a means of orienting the thrust vector produced by each of the two half-nozzles.

16. A turbomachine comprising an exhaust assembly as claimed in one of claims 1 to 13 and 15.

## Patentansprüche

1. Ausstoßvorrichtung für die Antriebsgase bei einem Luftfahrzeug, das durch heiße Gase angetrieben wird, die auf dessen Achse durch einen Gasgenerator erzeugt werden, bestehend aus einem Überleitungselement (21), das in zwei Leitungselemente (22, 23) mündet, die jeweils mit einer Ausstoß-Halbdüse (24, 26) in Verbindung stehen,
**dadurch gekennzeichnet,**
**dass** jedes der beiden Leitungselemente (22, 23) hinter dem Überleitungselement einen Bogen macht, der von einem ersten Teil gebildet wird, welcher den Gasstrom in einer radialen, sich von der Achse des Luftfahrzeugs entfernenden Richtung führt, sowie von einem zweiten Teil hinter dem ersten Teil, welcher den Gasstrom in einer radialen Richtung auf diese Achse zu führt, wobei der Gasstrom hinter dem Bogen auf die Achse zurückgeführt wird, wobei die Elemente im Inneren der Leitung, die sich vor dem Bogen befinden, von hinten nicht zu sehen sind.

2. Vorrichtung nach dem vorherigen Anspruch, bei der sich die beiden Bögen in einer und derselben Ebene befinden und symmetrisch zueinander verlaufen.

3. Vorrichtung nach einem der vorherigen Ansprüche, bei der der Gasgenerator ein Gasturbinenantrieb ist.

4. Vorrichtung nach dem vorherigen Anspruch, bei der das Überleitungselement einen zylindrischen vorderen Teil (21A) insbesondere mit kreisförmigem Querschnitt aufweist.

5. Vorrichtung nach dem vorherigen Anspruch, wobei der Querschnitt des Überleitungselements sich von der Form des kreisförmigen Querschnitts nach hinten fortschreitend zu zwei aneinandergrenzenden elliptischen Querschnitten entwickelt.

6. Vorrichtung nach dem vorherigen Anspruch, bei der der elliptische Querschnitt der beiden Leitungselemente (22, 23) eine vertikale oder horizontale Hauptachse hat.

7. Vorrichtung nach einem der vorherigen Ansprüche, die so ausgeführt ist, dass ein Haupt-Antriebsgasstrom in einen ersten und einen zweiten Strom unterteilt wird, um in einer ersten und einer zweiten Halbdüse (24, 26) ausgestoßen zu werden, und die mindestens eines der beiden folgenden Steuermittel enthält: Mittel zum Verteilen des Hauptstroms auf jede der beiden Halbdüsen und Mittel zur Ausrichtung des von jeder der beiden Halbdüsen erzeugten Schubvektors.

8. Vorrichtung nach dem vorherigen Anspruch, bei der die genannten beiden Mittel mit Fluidik-Einspritzung (28, 29) oder mechanisch funktionieren.

9. Vorrichtung nach einem der Ansprüche 7 und 8, wobei die genannten Halbdüsen (24, 26) für eine Ausrichtung des Schubvektors in einer Schleife angeordnet sind.

10. Vorrichtung nach einem der Ansprüche 7 bis 9, wobei die genannten Halbdüsen (24, 26) für eine Steuerung in einer Nickschwingbewegung oder in einer Rollbewegung angeordnet sind.

11. Vorrichtung nach den Ansprüchen 9 und 10, die zwei Paare von Halbdüsen aufweist, insbesondere das eine für die Ausrichtung in einer Schleife, die andere für die Ausrichtung in einer Nickschwingbewegung.

12. Vorrichtung nach Anspruch 8, wobei das Mittel zur Steuerung der Verteilung der Ströme Mittel zum Einspritzen (28) von Fluid in den Hals (24C, 26C) jeder der Halbdüsen umfasst.

13. Vorrichtung nach dem vorherigen Anspruch, wobei der Gasgenerator ein Turboluftstrahltriebwerk ist, dessen Fluidik-Einspritzmittel mit Luft gespeist werden, die am Verdichter des Generators entnommen wird.

14. Arbeitsverfahren der Ausstoßvorrichtung nach dem vorherigen Anspruch, das eine kontinuierliche Entnahme am Verdichter des Generators beinhaltet.

15. Vorrichtung nach Anspruch 7 oder 8, bei der der Hauptstrom von zwei Gasgeneratoren erzeugt wird, und die ein Mittel zur Ausrichtung des von jeder der beiden Halbdüsen erzeugten Schubvektors umfasst.

16. Turboluftstrahltriebwerk mit einer Ausstoßvorrichtung nach einem der Ansprüche 1 bis 13 und 15.
